(19) Europäisches Patentamt

European Patent Office

Office européen des brevets

(11) **EP 1 707 886 A2**

(12) **EUROPEAN PATENT APPLICATION**

(43) Date of publication:
04.10.2006 Bulletin 2006/40

(51) Int Cl.:
*F24D 19/10* (2006.01)

(21) Application number: 06000413.2

(22) Date of filing: 10.01.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 24.03.2005 JP 2005085179

(71) Applicant: Hitachi Home & Life Solutions, Inc.,
Minato-ku,
Tokyo 105-8410 (JP)

(72) Inventors:
• **Endoh, Kazuhiro**
Hitachi Home&Life Solutions Inc.
Tochigi-ken (JP)
• **Matsubayashi, Shigeru**
Hitachi Home&Life Sol. Inc.
Tochigi-ken (JP)

(74) Representative: **Beetz & Partner**
**Steinsdorfstrasse 10**
**D-80538 München (DE)**

(54) **Heat-pump type heating apparatus**

(57) A heat-pump type heating apparatus, having: a heat-pump refrigerant circuit, within which are connected a compressor (11), a heat-exchanger (14) for conducting heat-exchange between a refrigerant compressed within the compressor (11) and a fluid, a decompressing apparatus (17) for decompressing the refrigerant conducted with the heat-exchange, an evaporator (20) for conducting heat-exchange between the refrigerant decompressed and an air, through refrigerant conduits, provided therebetween; a heating circuit (3), within which are connected a circulation pump (41) for sending the fluid to the heat-exchanger (14), an heating terminal (48), having a fluid inlet, into which the fluid heated within the water-refrigerant heat exchanger (14), and a fluid outlet, from which that fluid flows out, for radiating heat of that fluid, through conduits provided therebetween; an operation controller means (5) for operating and controlling equipment of the heat-pump refrigerant circuit and the heating circuits (3); and a circulation flow-rate controlling means for controlling the circulation pump (41) upon basis of fluid inlet temperature and fluid outlet temperature of the heating terminal (48), or in addition thereto a room temperature of a room where the heating terminal (48) is installed; thereby providing the heat-pump type heating apparatus enabling to obtain high efficiency of the equipment.

**FIG.1**

**Description**

**BACKGROUND OF THE INVENTION**

The present invention relates to a heat-pump type heating apparatus for achieving high efficiency of equipment, and in particular, that within the heating apparatuses for circulating a fluid heated by a heat pump, thereby to obtain heating.

In general, a heat-source machine and a heating terminal (s) are connected through a hot-water conduit or pipe, in a hot-water heating apparatus, in which the hot water heated up to about 60°C, for example, by the heat-source machine is circulated within the conduits, thereby obtaining the heating by means of the heating terminal(s). For example, heating obtained by means of floor-heating equipment is high in comfortableness, and therefore it is spreading widely. Also, a burning-type hot-water heating apparatus, using petroleum or gas as a fuel, has a problem, from a viewpoint of the energy consumption and the safety thereof, and then a heat-pump type heating apparatus is commercialized, so as to take the place of those.

For example, in the following Patent Document 1 is proposed a heat-pump type floor heating apparatus, which controls a flow-rate of circulation of hot water depending on the temperature of a water-refrigerant heat exchanger for heating the hot water, so as to shorten the start-up time of said floor heating apparatus.

Also, in the following Patent Document 2 is proposed a heat-pump type floor heating apparatus, which controls the rotation speed of a compressor down to the minimum rotation speed for a predetermined time period, while detecting the temperature of returning water in a circuit of the hot-water heating, thereby stabilizaing the temperature of the hot water and increasing an efficiency thereof.

Patent Document 1: Japanese Patent Laying-Open No. 2002-122334 (2002); and

Patent Document 2: Japanese Patent Laying-Open No. 2000-46417 (2002).

In general, a floor-heating panel to be connected to the heat-pump type floor heating apparatus is changed depending on the size of a room, for example, the number of Japanese tatami mats. In this instance, there is a flow-rate of hot-water circulation for obtaining COP (heating capacity/input) at the maximum, for every number of tatatmi mats (i.e., the size of the room). The reasons of this will be mentioned below.

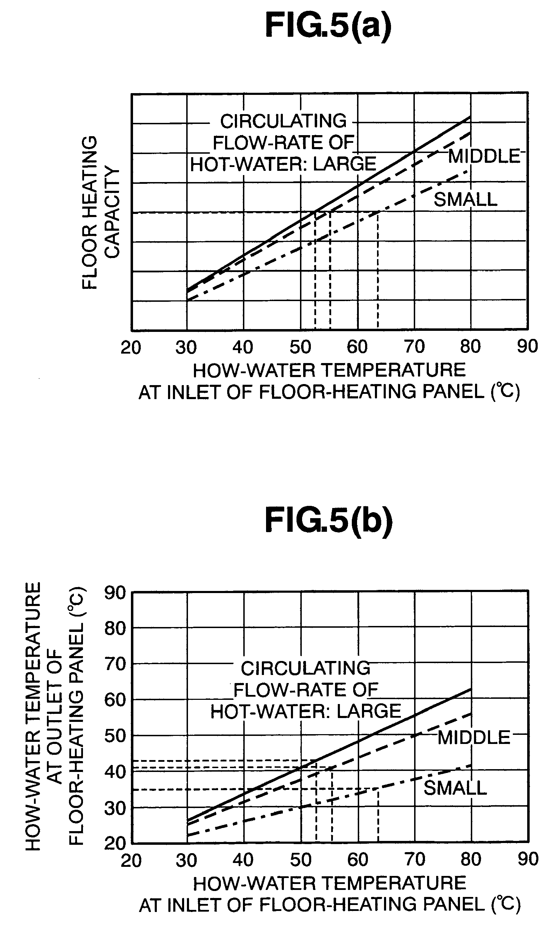

Fig. 5 shows relationships between temperature at an inlet of hot water of the floor-heating panel for use of a certain number of tatami mat (i.e., a certain room size) and capacity of floor heating (in Fig. 5(a)) and temperature at an outlet thereof (in Fig. 5(b)), while taking a flow-rate of the hot-water circulation as parameters (large, middle, small). It is also assumed that the room temperature is constant. And, explanation will be made by assuming that the water temperature at an intake of hot water of the floor-heating panel is the hot-water temperature at the inlet, and that the water temperature at an outlet of the same floor heating equipment is the hot-water temperature at the outlet.

Under condition of an equal floor-heating capacity, if lowering a flow-rate of circulation of the hot water, it is necessary to increase the hot-water temperature at the inlet. In this case, the hot-water temperature at the outlet falls down, on the contrary to the above; therefore, the difference comes to be large between the hot-water temperature at the inlet and the hot-water temperature at the outlet. Herein, the refrigerant to be used is carbon dioxide.

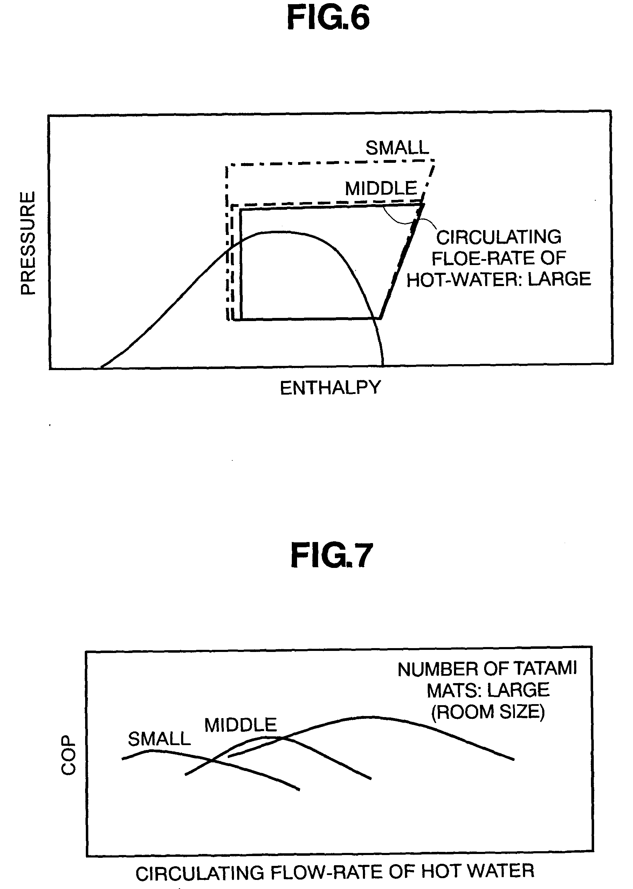

In this instance, the heat-pump type floor heating apparatus makes heating from the hot-water temperature at the outlet of the floor-heating panel to the hot-water temperature at the inlet thereof. A cooling cycle plan of the heat-pump type floor heating apparatus is shown in Fig. 6. In this Fig. 6, it is shown on the Mollier chart, while changing the flow-rate of circulation of hot water as the parameters (large, middle, small).

The less the amount or flow-rate of circulation of hot water, the larger the breadth of an increase of the heating of hot water within the heat-pump type floor heating apparatus; therefore, the difference comes to be large between temperatures at the inlet and the outlet, on a side of regrigerant of a gas cooler . Accordingly, the difference in specific enthalpy also comes to be large.

On the other hand, the less the flow-rate of circulation of hot water, the lower the heat transfer coefficient or rate goes down on a side of water within a water-refrigerant heat exchanger (i.e. , the gas cooler), due to decrease of flow velocity. For this reason, if trying to obtain the equal heating capacity, the difference comes to be large in the temperatures between the water and the refrigerant, and as a result thereof, discharge pressure of the compressor rises up, and also the specific compression work increases.

Namely, the less the flow-rate of circulation of hot water, the more the difference on enthalpy and the compression work, but those are different in the ratio of increasing; therefore, there can be found a point where COP (however, assuming that the efficiency of the compressor is constant, but not including an input of a circulation pump therein) reaches to a peak in a certain the flow-rate of circulation of hot water.

Also, when supplying the hot water by means of a DC pump, a pump input goes down as the flow-rate of circulation of hot water decreases. Accordingly, COP including the pump input therein has such a distribution, shifting the peak thereof a little bit toward where the circulation flow-rate of hot water is smaller.

In summary of the above-mentioned, Fig. 7 shows an outline of COP, with respect to the circulation flow-rate of hot water for each of the numbers of tatami mats (or, the room size) (large, middle, small), respectively. From the figure, for each of the numbers of tatami mats (or, the room size), there can be found an amount or flow-rate of circulation of hot water where COP reaches to the peak point. However, in the heat-pump type floor heating apparatus, no adjustment is made on the circulation flow-rate of hot water for each of the numbers of tatami mats (or, the room sizes), relating to the conventional technology. Nor, in the heat-pump type hot-water heating apparatus, no adjustment is made, in the similar manner, on the circulation flow-rate of hot water for each of the heating terminals.

## BRIEF SUMMARY OF THE INVENTION

According to the present invention, for dissolving such the problems mentioned above, an object thereof is to provide a heat-pump type heating apparatus, enabling to obtain high efficiency of equipment.

For achieving the object mentioned above, according to the present invention, there is provided a heat-pump type heating apparatus, having: a heat-pump refrigerant circuit, within which are connected a compressor, a heat-exchanger for conducting heat-exchange between a refrigerant compressed within said compressor and a fluid, a decompressing apparatus for decompressing the refrigerant conducted with the heat-exchange, an evaporator for conducting heat-exchange between the refrigerant decompressed and an air, through refrigerant conduits provided therebetween; a heating circuit, within which are connected a circulation pump for sending said fluid to said heat-exchanger, an heating terminal, having a fluid inlet, into which the fluid heated within said water-refrigerant heat-exchanger, and a fluid outlet, from which that fluid flows out, for radiating heat of that fluid, through conduits provided therebetween; an operation controller means for operating and controlling equipment of said heat-pump refrigerant circuit and said heating circuits; and a circulation flow-rate controlling means for controlling said circulation pump upon basis of fluid inlet temperature and fluid outlet temperature of said heating terminal.

Also, according to the present invention, within the heat-pump type heating apparatus, as described in the above, said circulation flow-rate controlling means may control said circulation pump upon basis of difference between the fluid inlet temperature and the fluid outlet temperature of said heating terminal.

Also, according to the present invention, within the heat-pump type heating apparatus, as described in the above, said circulation flow-rate controlling means may control said circulation pump from the fluid inlet temperature and the fluid outlet temperature of said heating terminal and a room temperature of a room where said heating terminal is installed, or a circulation flow-rate sensor may be provided in said heating circuit.

Also, according to the present invention, the heat-pump type heating apparatus, as described in the above, may further comprise a means for setting the circulation amount of a circulation pump.

Also, according to the present invention, within the heat-pump type heating apparatus, as described in the above, said heating circuit may have a plural number of heating terminals, and said circulation flow-rate controlling means changes circulation flow-rate of said circulation pump for each of said heating terminals.

And also, according to the present invention, within the heat-pump type heating apparatus, as the refrigerant within said heat-pump refrigerant circuit can be used carbon dioxide.

## BRIEF DESCRIPTION OF THE SEVERAL VIEWS OF THE DRAWING

Those and other objects, features and advantages of the present invention will become more readily apparent from the following detailed description when taken in conjunction with the accompanying drawings wherein:

Fig. 1 is a view of the structures of principal portions of a heat-pump type heating apparatus, according to a first embodiment of the present invention;

Fig. 2 is a view of the structures of principal portions of the heat-pump type heating apparatus, according to a second embodiment of the present invention;

Fig. 3 is a view of the structures of principal portions of the heat-pump type heating apparatus, according to a third embodiment of the present invention;

Fig. 4 is a view of the structures of principal portions of the heat-pump type heating apparatus, according to a fourth embodiment of the present invention;

Figs. 5(a) and 5(b) are views for showing relationships between fluid temperature at an inlet of a floor heating panel and capacity of floor heating and fluid temperature at an outlet thereof;

Fig. 6 is a view for showing a cooling cycle plan of the heat-pump type floor heating apparatus on the Mollier chart by taking circulation flow-rate of hot water as the parameters; and

Fig. 7 is a view for showing COP with respect to the circulation flow-rate of hot water by taking the number of tatami mats (or room sizes) as the parameter.

## DETAILED DESCRIPTION OF THE INVENTION

Hereinafter, embodiments according to the present invention will be fully explained by referring to the attached drawings.

<Embodiment 1>

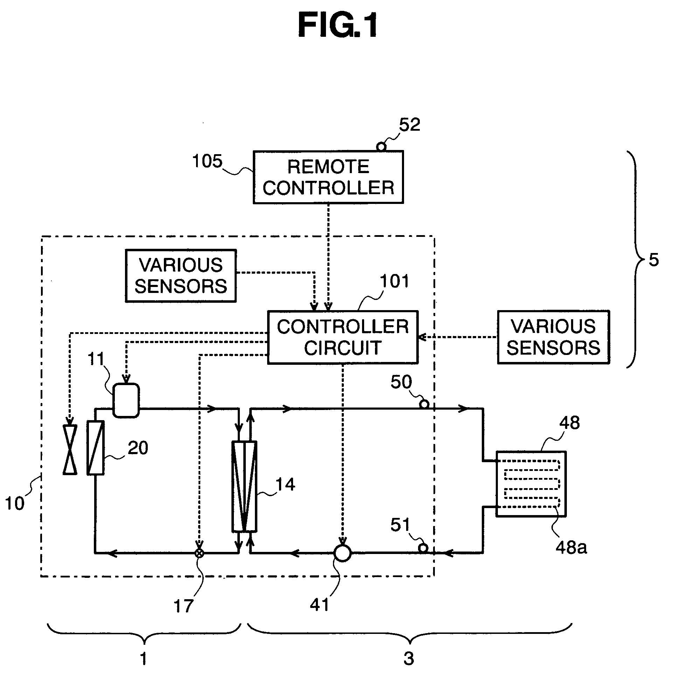

Fig. 1 is a view for showing the structures of the principal portions of the heat-pump type heating apparatus, applying the present invention therein. The heat-pump type heating apparatus comprises a heat-pump refrigerant circuit 1, a heating circuit 3, and an operation controller means 5. As a heat source unit 10, includes the heat-pump refrigerant circuit 1. Apart of the heating circuit 3, and the operation controller means 5. A fluid circulating in the heating circuit 3 may be a hot water, into which no additive is added, or a hot water, into which an additive is mixed, such as, an anti-freezing solution or an antiseptic solution, or the like, for example. Hereinafter, explanation will be made, assuming that those are applied to be brine for hot water.

The heat-pump refrigerant circuit 1 is constructed with a closes circuit of connecting a compressor 11, a water-refrigerant heat exchanger 14, a decompression device 17, and an evaporator 20, sequentially, by refrigerant conduits or pipes, and a refrigerant is enclosed therein. The compressor is controllable on the capacity thereof, and it has structure controllable on the rotation speed, from a low speed to a high speed. The water-refrigerant heat exchanger 14 comprises a heat-transfer pipe of refrigerant side and a heat-transfer pipe of hot-water side, wherein heat exchange is conducted between them. The evaporator 20 is an air-refrigerant heat exchanger for conducting heat exchange between an air and the refrigerant.

The heating circuit 3 is constructed with a closed circuit of connecting a circulation pump 41, a water-refrigerant heat exchanger 14, a heating terminal 48, sequentially, by conduits or pipes and a brine for use of hot water is enclosed therein. The circulation pump 41 is provided on a way of the pipe connecting the heating terminal 48 and an inlet of the heat-transfer pipe of hot-water side of the water-refrigerant heat exchanger 14. Upon operation of the circulation pump 41, the brine for hot water is circulated into the direction of an arrow shown in the figure, within the heating circuit 3. This circulation pump 41 has such the structure that the circulation flow-rate of hot water can be controlled by a controller means.

The heating terminal 48 has the structure, so as to discharge heat to a floor, mainly, when the brine heated within the water-refrigerant heat exchanger 14 passes through, within a heat-transfer pipe 48a. The heating terminal may include therein a floor heating terminal (e.g., a floor heating panel) and a bathroom-heating terminal, for example.

An inlet (or going) fluid temperature sensor 50 for detecting temperature of the fluid directing to the floor heating panel is attached on a pipe, connecting between an outlet of the hot-water pipe of the water-refrigerant heat exchanger 14 and an inlet of the heat-transfer pipe 48a of the heating terminal 48. An outlet (or returning) fluid temperature sensor 51 for detecting temperature of the fluid directing from the heating terminal 48 to the water-refrigerant heat exchanger 14 is attached on a pipe, connecting between an outlet of the heat-transfer pipe 48a of the heating terminal 48 and an inlet of hot-water pipe of the water-refrigerant heat exchanger 14. Those sensors are provided for sensing water temperatures of the hot waters, which go and back. A room temperature sensor 52 is provided for sensing room temperature of a room, within which the floor heating will be done. The room temperature sensor 52 is unified with a remote controller 105, into one body, in the figure, however it may be separated from it.

The operation controller means 5 comprises a controller circuit 101, the remote controller 105, and various sensors. Operation settings on the remote controller 105, and detection signals of the various sensors, such as, temperature sensors for detecting temperatures at various portions and pressure sensors for detecting pressures, etc., are inputted into the controller circuit 101.

According to the operation settings on the remote controller 105, driving/stopping of the heat-pump refrigerant circuit 1 and controlling on the rotation speed of the compressor are executed, and further controlling is also executed on the circulation flow-rate of hot water of the circulation pump 4, within the hot-water heating circuit 3. Also, just after staring the heating operation, so as to shorten a time for starting up the heating, the compressor 11 is controlled so that it operates at a predetermined high-speed rotation speed.

Next, explanation will be made about the control on the circulation flow-rate of hot water within the heat-pump type hot-water heating apparatus, according to the present invention.

By the way, a number of transfer units "NTU" on the side of hot-water in the floor heating panel can be expressed by the following:

$$NTU = KA_p / (\alpha M C_p \rho) \ldots\ldots\ldots (1)$$

Where, "K" is heat overall transfer coefficient from the hot water to an air, "Ap" an area of the floor-heating panel, "$\alpha$" heat-radiation ratio on an upper surface of the floor heating, "M" the circulation flow-rate of hot water, "Cp" the specific heat of water, and "$\rho$" density of water.

Also, temperature effectiveness "$\epsilon$" on the hot-water side can be expressed by the following:

$$\epsilon = (T_{in} - T_{out}) / (T_{in} - T_r) = 1 - \exp(-NTU) \ldots\ldots\ldots (2)$$

Where, "$T_{in}$" is fluid temperature at the inlet of the floor-heating panel, "$T_{out}$" fluid temperature at the outlet of the floor-heating panel, and "$T_r$" the room temperature.

With the overall heat transfer coefficien from the hot water to an air, "K" in the equation (1), since a thermal resistance on the air side is dominant, then even if the circulation flow-rate "M" changes on the hot-water side in a certain degree, an influence thereof is small; therefore, value of "K" can be considered to be nearly constant. Also, values of "Ap", "$\alpha$", "$C_p$" and "$\rho$" in the equation (1) are also constant, or nearly constant.

Accordingly, from those equations (1) and (2), a one-to-one correspondence can be established between the temperature effectiveness "$\epsilon$" and the circulation flow-rate "M" of hot water; therefore, it is possible to obtain a desired flow-rate of circulation of hot water by controlling the circulation pump 41, so as to bring the temperature effectiveness "$\epsilon$" to correspond to a predetermined circulation flow-rate "M" of hot water. Namely, it is possible to operate the heat-pump type hot-water heating apparatus at high efficiency, by controlling the circulation pump 41, appropriately, so that the temperature effectiveness calculated from the values of the inlet fluid temperature sensor 50 of the floor heating panel 48, the outlet fluid temperature sensor 51 of the floor heating panel 48, and the room-temperature sensor 52, becomes the predetermined value.

The temperature effectiveness to be a target corresponding to the circulation flow-rate of hot water, at which COP reaches to the peak, for the floor-heating panel set up, is inputted from the remote controller 105, for example.

Or, in case if the temperature effectiveness to be a target corresponding to the circulation flow-rate of hot water, at which COP reaches to the peak, does not change so much, depending upon the size of the floor heating panel, then target temperature effectiveness may be memorized in advance within the controller circuit 101.

Accordingly, since the circulation flow-rate of hot water can be controlled to be suitable for the floor-heating panel set up, then it is possible to achieve an operation at high efficiency.

<Embodiment 2>

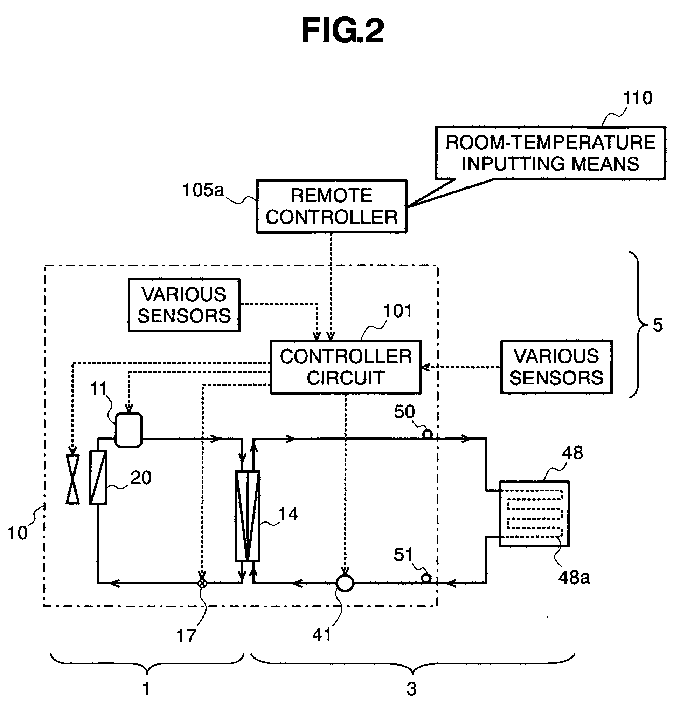

Fig. 2 shows the structures of the principal portions of a heat-pump type hot-water heating apparatus, according to a second embodiment. The difference of this embodiment from the first embodiment lies in that no room-temperature sensor is provided, but in the place thereof, there is provided a room-temperature inputting means 110 on the remote controller 105a.

When the room temperature comes up to nearly constant after heating a room by means of the heat-pump type hot water heating apparatus, that room temperature at that time is inputted into the remote controller 105. The controller circuit 101 calculates out the temperature effectiveness "$\epsilon$" from the room temperature "$T_r$" inputted, and the fluid temperature at the inlet "$T_{in}$" and the fluid temperature "$T_{out}$" at the outlet of the floor-heating panel from the temperature sensors 50 and 51, and it controls the circulation flow-rate of the circulation pump 41 so that the value thereof comes to be the target value.

Accordingly, in the manner similar to the embodiment 1, it is possible to control the circulation flow-rate of hot water to be suitable for the floor-heating panel set up, and therefore, it is possible to achieve the operation at high efficiency.

Also, comparing to the embodiment 1, since the room temperature sensor can be removed, it is possible to achieve reduction of costs for it.

Also, without provision of the room-temperature inputting means 110, it is also possible to control the circulation flow-rate by the circulation pump 41 so that the value thereof comes to be the target value, through calculation the temperature effectiveness with assuming that the room temperature is 20°C, for example. '

<Embodiment 3>

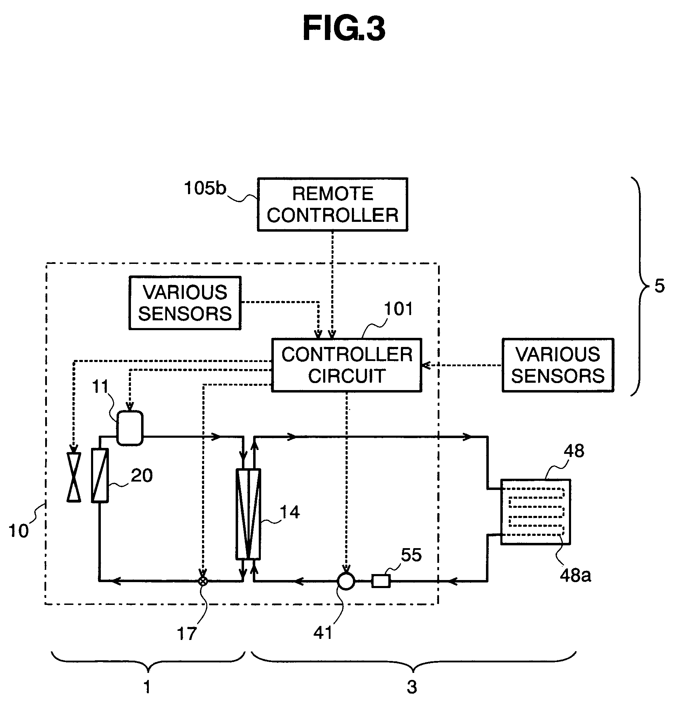

Fig. 3 shows the structures of the principle portions of a heat-pump type hot water heating apparatus, according to a third embodiment. The difference of this embodiment from the first embodiment and the second embodiments lies in an aspect that a flow rate sensor 55 is provided in the hot water heating circuit 3.

The controller circuit controls the circulation pump 41 so that the value of the flow rate sensor 55 comes to be a predetermined hot-water circulation flow-rate. The predetermined hot-water circulation flow-rate is inputted at an adequate value for the floor-heating panel installed, from the remote controller 105b.

Accordingly, the hot-water circulation flow-rate can be controlled to be suitable for the floor-heating panel installed, and therefore it is possible to achieve the operation thereof at high efficiency.

Also, comparing to the embodiments 1 and 2, since the hot-water circulation flow-rate is directly controlled; therefore, the hot-water circulation flow-rate can be adjusted at further high accuracy, and thereby enabling the operation at high efficiency.

<Embodiment 4>

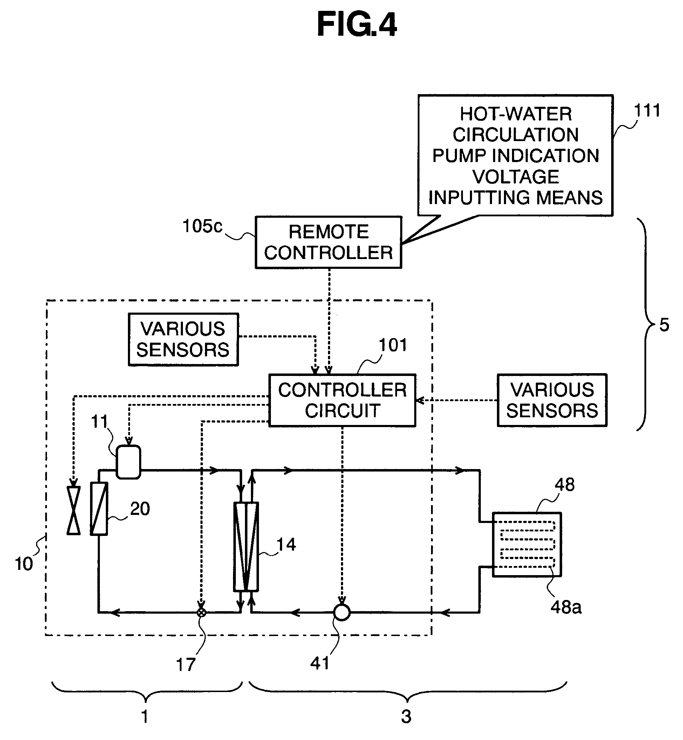

Fig. 4 shows the structures of the principal portions of a heat-pump type hot water heating apparatus, according to a fourth embodiment. The difference of this embodiment from the first to the third embodiments lies in an aspect that an indication voltage inputting means 111 is provided on a remote controller 105c, as a hot-water circulation flow-rate setting means for the circulation pump 41.

A person who is installing the apparatus or a user thereof calculates out a resistance in water passage within the hot-water heating circuit at that time, with using the hot-water circulation flow rate suitable for the floor-heating plate installed (this is described on a installing manual, or the like). Then, he/she obtains the indication voltage for the circulation pump (i.e., the DC motor) 41, balancing between that hot-water circulation rate and the resistance in water passage, from the head-flow rate curve (this is also described on a installing manual, or the like) . Next, he/she inputs that indication voltage through the indication voltage inputting means 111 provided on the remote controller 105c. Namely, it provides a means for changing the setup relating to the pump rotation speed control of the circulation pump 41, depending on the heating terminal to be combined with the present heat-pump type heating apparatus, for example, providing a means for inputting the setup value thereof on the remote controller 105c.

During the operation of the heat-pump type heating apparatus, the controller circuit 101 provides the indication voltage suitable for the circulation pump 41. Accordingly, the heat-pump type heating apparatus is operated at an appropriate hot-water circulation rate; therefore, enabling the operation at high efficiency.

Though the floor-type heating panel is provided as the heating terminal in those embodiments 1 to 4; however, the present invention can be applied into other terminal machines, such as, the terminal of heating dryer for use in a bath room, for example, since there is the circulation rate of hot-water, at which the energy efficiency reaches to the maximum, for each of the models.

As was fully mentioned in the above, according to the present invention, it is possible to provide the heat-pump type heating apparatus enabling to obtain high efficiency of the equipment.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

The present invention may be embodied in other specific forms without departing from the spirit or essential feature or characteristics thereof. The present embodiment(s) is/are therefore to be considered in all respects as illustrative and not restrictive, the scope of the invention being indicated by the appended claims rather than by the forgoing description and range of equivalency of the claims are therefore to be embraces therein.

Claims

1. A heat-pump type heating apparatus, having:

a heat-pump refrigerant circuit (1), within which are connected a compressor (11), a heat-exchanger (14) for conducting heat-exchange between a refrigerant compressed within said compressor (11) and a fluid, a decompressing apparatus (17) for decompressing the refrigerant conducted with the heat-exchange, an evaporator (20) for conducting heat-exchange between the refrigerant decompressed and an air, through refrigerant conduits provided therebetween;

a heating circuit (3), within which are connected a circulation pump (41) for sending said fluid to said heat-exchanger (14), an heating terminal (48), having a fluid inlet, into which the fluid heated within said water-refrigerant heat exchanger (14), and a fluid outlet, from which that fluid flows out, for radiating heat of that fluid, through conduit provided therebetween;

an operation controller means (5) for operating and controlling equipment of said heat-pump refrigerant circuit (3) and said heating circuit; and

a circulation flow-rate controlling means (101) for controlling said circulation pump (41) upon basis of fluid inlet temperature and fluid outlet temperature of said heating terminal (48).

2.  The heat-pump type heating apparatus, as described in the claim 1, wherein said circulation flow-rate controlling means (101) controls said circulation pump (41) upon basis of difference between the fluid inlet temperature and the fluid outlet temperature of said heating terminal (48).

3.  Heat-pump type heating apparatus according to claim 1 or 2, wherein said circulation flow-rate controlling means (101) controls said circulation pump (41) from the fluid inlet temperature and the fluid outlet temperature of said heating terminal (48) and a room temperature of a room where said heating terminal (48) is installed.

4.  Heat-pump type heating apparatus according to any of claims 1 to 3, wherein a circulation flow-rate sensor is provided in said heating circuit (3).

5.  Heat-pump type heating apparatus according to any of claims 1 to 4, wherein said heating circuit (3) has a plural number of heating terminals (48), and said circulation flow-rate controlling means changes circulation flow-rate of said circulation pump for each of said heating terminals.

6.  Heat-pump type heating apparatus according to any one of the claims 1 to 5, wherein the refrigerant within said heat-pump refrigerant circuit is carbon dioxide.

# FIG.1

EP 1 707 886 A2

# FIG.2

ROOM-TEMPERATURE INPUTTING MEANS — 110

REMOTE CONTROLLER — 105a

VARIOUS SENSORS

CONTROLLER CIRCUIT — 101

VARIOUS SENSORS

5

11

20

14

50

48

48a

10

17

41

51

1

3

# FIG.3

105b — REMOTE
CONTROLLER

VARIOUS
SENSORS

101

CONTROLLER
CIRCUIT

VARIOUS
SENSORS

5

11

20

14

48

48a

55

10

17

41

1

3

# FIG.4

HOT-WATER
CIRCULATION
PUMP INDICATION
VOLTAGE
INPUTTING MEANS    111

105c — REMOTE
CONTROLLER

5

VARIOUS
SENSORS

CONTROLLER
CIRCUIT    101

VARIOUS
SENSORS

11

20

10

14

48

48a

17

41

1

3

EP 1 707 886 A2

## FIG.5(a)

Graph: FLOOR HEATING CAPACITY (y-axis) versus HOW-WATER TEMPERATURE AT INLET OF FLOOR-HEATING PANEL (°C) (x-axis, 20 to 90). Labels: CIRCULATING FLOW-RATE OF HOT-WATER: LARGE, MIDDLE, SMALL.

## FIG.5(b)

Graph: HOW-WATER TEMPERATURE AT OUTLET OF FLOOR-HEATING PANEL (°C) (y-axis, 20 to 90) versus HOW-WATER TEMPERATURE AT INLET OF FLOOR-HEATING PANEL (°C) (x-axis, 20 to 90). Labels: CIRCULATING FLOW-RATE OF HOT-WATER: LARGE, MIDDLE, SMALL.

EP 1 707 886 A2

# FIG.6

PRESSURE (y-axis)

SMALL

MIDDLE

CIRCULATING
FLOE-RATE OF
HOT-WATER: LARGE

ENTHALPY

# FIG.7

COP (y-axis)

NUMBER OF TATAMI
MATS: LARGE
(ROOM SIZE)

SMALL

MIDDLE

CIRCULATING FLOW-RATE OF HOT WATER

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002122334 A
- JP 2000046417 A